Europäisches Patentamt

European Patent Office

Office européen des brevets

(11) Veröffentlichungsnummer: **0 267 398 B1**

## (12) EUROPÄISCHE PATENTSCHRIFT

(45) Veröffentlichungstag der Patentschrift: **26.02.92**

(21) Anmeldenummer: **87113966.3**

(22) Anmeldetag: **23.07.81**

(60) Veröffentlichungsnummer der früheren
Anmeldung nach Art. 76 EPÜ: **0 046 875**

(51) Int. Cl.⁵: **B64C 13/50**, H04B 10/00

(54) **Anordnung, insbesondere für Luftfahrzeuge, zur Übertragung von Steuersignalen.**

(30) Priorität: **02.09.80 DE 3032918**
**25.03.81 DE 3111722**

(43) Veröffentlichungstag der Anmeldung:
**18.05.88 Patentblatt  88/20**

(45) Bekanntmachung des Hinweises auf die
Patenterteilung:
**26.02.92 Patentblatt  92/09**

(84) Benannte Vertragsstaaten:
**FR GB IT SE**

(56) Entgegenhaltungen:
**GB-A- 2 052 185**
**US-A- 3 076 510**

**FREQUENZ, Band 31, Nr. 12, Dezember 1977,
Seiten 364-368, Berlin, DE; K. ERDEL et al.:
"Glasfaser-Bussysteme zur Signalübertragung in Bordnetzen"**

**WESTINGHOUSE ENGINEER, Band 31, Nr. 4,
Juli 1971, Seiten 114-119, Pittsburgh, US;
M.A. GEYER et al.: "Automatic control of
aircraft electrical system reduces wiring and
improves reliability"**

(73) Patentinhaber: **Deutsche Airbus GmbH
Kreetslag 10
W-2103 Hamburg 93(DE)**

(72) Erfinder: **Wendt, Hans Joachim, Ing. (grad.)
Harburger Strasse
W-2150 Buxtehude(DE)**

EP 0 267 398 B1

## Beschreibung

Die Erfindung bezieht sich auf eine Anordnung entsprechend dem ersten Teil des Anspruches 1.

Es ist bekannt geworden, insbesondere für Luftfahrzeuge, zur Übertragung von Steuersignalen zur Betätigung von z.B. Steuerflächen mit einem passiven Leitungssystem, wobei das Leitungssystem durch ein Netzwerk, bestehend aus mehrfach vermaschten Lichtleitern, gebildet ist und Steuerorgane zur Erzeugung von Steuerbefehlen in Form digitaler Lichtsignale über in Signal-Prozessoren eingebaute Mischer und Informationssysteme an das Netzwerk angeschlossen sind und die Steuerflächen sowie andere Steuerelemente durch über das Netzwerk adressierbare Servo-Einheiten anzusteuern und zu betätigen (FREQUENZ, Band 31, Nr. 12, Dezember 1977, Seiten 364 - 368).

Bei dieser Anordnung wird eine im Vergleich mit mechanischen, hydraulischen oder elektrischen oder daraus kombinierten Lösungen wesentlich gesteigerte Zuverlässigkeit erreicht. Weiterhin ist aufgrund dieses Vorschlages die Möglichkeit gegeben, daß in bestimmten gefährlichen Situationen die Steuerflächen neuartige Kombinationen von Ausschlägen ausführen. Hierdurch wird bei Ausfall eines Ruders die Manövrierfähigkeit eines Flugzeuges erhalten. Bei der vorgeschlagenen Lösung liegt der Zuverlässigkeitswert mindestens um eine Größenordnung höher als bei bisherigen Anordnungen dieser Art.

Ein Nachteil der vorgenannten Anordnung besteht jedoch darin, daß der hohe Grad der Zuverlässigkeit verlorengeht, wenn die Anordnung mit einer herkömmlichen Energieversorgungseinrichtung betrieben wird.

Die Aufgabe der Erfindung besteht darin, für eine Anordnung der vorgenannten Art eine Energieversorgungseinrichtung zu schaffen, deren Zuverlässigkeit der Zuverlässigkeit der Anordnung selbst gleichwertig ist.

Diese Aufgabe wird erfindungsgemäß mit den kennzeichnenden Merkmalen des Anspruches 1 gelöst. Vorteilhafte Weiterbildungen der Erfindung sind in den Ansprüchen 2 bis 11 angegeben.

Mit der erfindungsgemäß ausgestalteten Anordnung wird der Grad der Zuverlässigkeit der gesamten Anordnung einschließlich der Energieversorgungseinrichtung auf das Niveau der Gesamtanordnung angehoben.

Die Erfindung wird im folgenden, ausgehend von dem bekannt gewordenen Leitungssystem aus einem Netzwerk mit mehrfach vermaschten Lichtleitern, anhand von Zeichnungen schematisch dargestellt: Es zeigen:

Fig. 1    eine Übersicht über eine Anordnung für ein Flugzeug;

Fig. 2    eine Schaltung eines Hauptsteuerkreises;

Fig. 3    eine Prinzipschaltung einer Energieversorgungseinrichtung;

Fig. 4    eine interne Prinzipschaltung einer Prüfeinheit nach Fig. 3;

Fig. 5    eine interne Prinzipschaltung einer Meß-und Schalteinheit und einer Übertragungseinheit nach Fig. 3;

Fig. 6    einen Netzwerkanalysator mit einem Teil eines Netzwerkes;

Fig. 7    eine interne Prinzipschaltung eines Netzwerkanalysators nach Fig. 6.

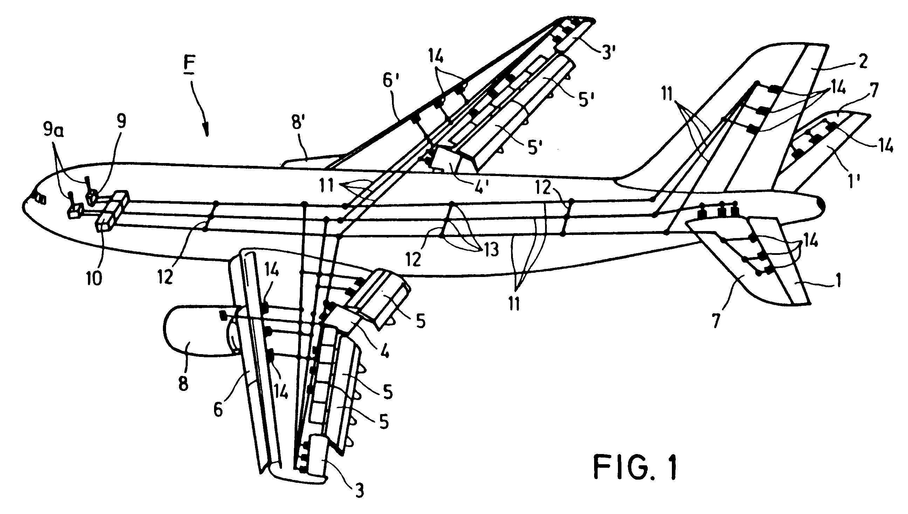

Fig. 1 zeigt eine Übersicht einer Anordnung zur Übertragung von Steuersignalen für ein Flugzeug F. Das Flugzeug F weist die üblichen Steuerflächen auf, und zwar zwei Höhenruder 1,1', ein Seitenruder 2, zwei Langsamflug-Querruder 3,3', zwei Schnellflug-Querruder 4,4', Landeklappen 5,5', Nasenklappen 6,6' und eine Höhenflosse 7. Zum Flugzeug F gehören u.a. die Triebwerke 8,8' sowie die Steuerorgane 9, wobei die schematische Darstellung die Steuersäulen 9a mit Pedalen andeutet.

Das Leitungssystem zur Übertragung von Steuersignalen weist hauptsächlich mehrere Signalprozessoren 10 und ein aus Längsleitungen 11 und Querleitungen 12 bestehendes mehrfach vermaschtes Netzwerk aus Lichtleitern auf, das mit adressierbaren Servo-Einheiten 14 in Verbindung steht. Knotenpunkte 13 bestehen dabei aus Verzweigungen bekannter Art, z.B. in Form von Stern- oder T-Kopplern. Die Steuerorgane sind derart ausgeführt, daß sie ein dem Steuerbefehl entsprechendes digitales Lichtsignal liefern. Der an der Peripherie des Netzwerkes angeordneten Servo-Einheiten 14 verfügen über Einrichtungen zur Umwandlung des ankommenden Lichtsignals in eine Steuerbewegung. Außerdem weisen sie Einrichtungen auf, die die momentane Stellung z.B. eines Ruders ermitteln und ein entsprechendes Lichtsignal an die Längsleitungen 11 abgeben.

Der zwischen den Signalprozessoren 10 und den über die Längsleitungen 11 angeschlossenen peripheren Geräten ablaufende Datenverkehr wird zyklisch durchgeführt, d.h. die Signalprozessoren 10 geben in festem Abfragetakt adressierte Informationssignale z.B. an die Servo-Einheiten 14 ab, die diese wiederum mit adressierten Informationssignalen beantworten. Der hierbei ablaufende Datenverkehr ist in Form von Telegrammen mit fester Wortlänge definiert. Diese Telegramme sind einer Trägerfrequenz in Form einer digitalen Frequenzmodulation aufgeprägt, wobei das Lichtsignal letztlich eine der Trägerfrequenz entsprechende Amplitudenmodulation aufweist. Hierdurch wird eine sehr hohe Störsicherheit gegenüber eventueller Fremdlichteinstreuung erreicht. Aufgrund der Vermaschung ist sichergestellt., daß das Signal auf vielen Wegen von den Signalprozessoren 10 zu der angesprochenen Servo-Einheit 14 gelangt, wodurch die Zuverlässigkeit des Systems weiter erhöht wird. Das dargestellt System ist dreifach ausgeführt, d.h. im Rumpf, im Flügel sowie in den Leitwerken sind drei Längsleitungen 11 mit entsprechenden Querleitungen 12 angeordnet und pro Ruder, Steuerfläche oder dergleichen sind drei Servo-Einheiten 14 vorgesehen. Die Signalprozessoren 10 enthalten den Hauptsteuerkreis der gesamten Anordnung. Auch diese Einheit ist zur Steigerung der Zuverlässigkeit dreifach ausgeführt.

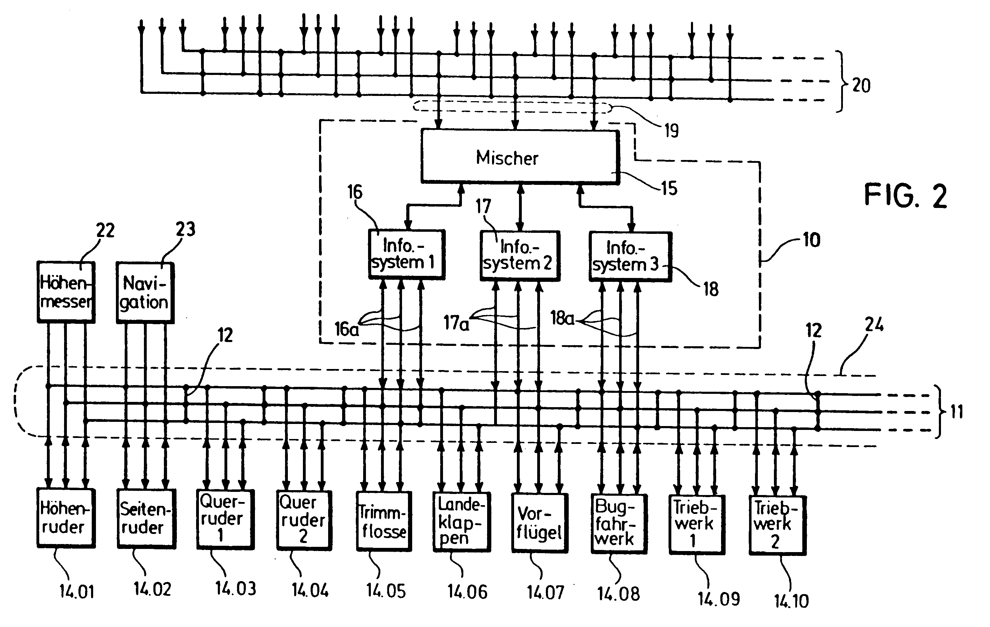

Fig. 2 zeigt die Schaltung von einem der Signalprozessoren 10, die im wesentlichen aus einem Mischer 15 und drei Informationssystemen 16,17 und 18 besteht. Über dreifach ausgeführte Lichtleitungen 19 ist der Mischer 15 mit einem vermaschten Geber-Netzwerk 20 aus Lichtleitern verbunden. Der dreifache Ausgang des Mischers 15 ist mit je einem der Informationssysteme 16 bis 18 verbunden. Jedes System 16 bis 18 weist weiterhin je drei Anschlußlichtleitungen 16a bis 18a auf, die jeweils mit dem Netzwerk 24 aus den Längsleitungen 11 und Querleitungen 12 in Verbindung steht. Der Mischer 15 übernimmt hier die Aufgabe, die z.B. von der Steuersäule kommenden digitalen Lichtsignale so aufzubereiten, daß diese unter logischer Berücksichtigung weiterer Informationen an die Informationssysteme 16 bis 18 weitergeleitet werden. Werden dem Mischer 15 z.B. ein Signal, das einer vorgegebenen Soll-Flughöhe entspricht, und ein weiteres von einem Höhenmesser 22 geliefertes Signal, das der Ist-Höhe entspricht, zugeführt, so bildet der Mischer 15 ein zur Einstellung der Soll-Flughöhe dienendes Differenzsignal, das über die Informationssysteme 16 bis 18 in das Netzwerk 24 eingegeben wird. Dieses an die Servo-Einheit 14.01 des Höhenruders adressierte Telegramm wird nun von dieser Einheit aufgenommen und in einen entsprechenden Ausschlag des Ruders 1 umgesetzt, der das Flugzeug ohne Einwirkung des Piloten wieder in die Soll-Flughöhe zurückführt.

Auf die gleiche Weise können von einem Navigationsgerät 23 gelieferte Kurs-Istwerte durch den Mischer 15 mit einem vorgegebenen Soll-Kurs verglichen werden. Das hierbei entstehende Differenzsignal wird in einen an die Servo-Einheit 14.02 des Seitenruders 2 und an die Servo-Einheiten 14.03 und 14.04 der Querruder 3 adressierten Steuerbefehl umgewandelt und über die Informationssysteme 16,18 und 18 weiter über das Netzwerk 24 den genannten Servo-Einheiten zugeführt. Diese antworten mit einem Ruderausschlag, der die erforderliche Kurskorrektur bewirkt.

Ein über das Geber-Netzwerk 20 an den Mischer 15 angeschlossenes, nicht dargestelltes Anzeige- und Bediengerät dient u.a. der graphischen Darstellung der Soll- und Istwerte unter Verwendung üblicher Sinnbilder. Wird die Anordnung auf manuellen Betrieb umgeschaltet, so entfällt der Soll-Ist-Vergleich durch den Mischer und die über das Geber-Netzwerk 20 ankommenden Steuerbefehle werden direkt in Form entsprechender Telegramme an die betreffenden Servo-Einheiten weitergeleitet. An das Geber-Netzwerk 20 sind alle einen Steuerbefehl abgebenden Steuerorgane 9, wie Steuersäulen, Pedale, Trimmrad usw. über einen dreifach ausgeführten Lichtleiter angeschlossen. Bei den vorgeschriebenen Abläufen besteht die Aufgabe der Informationssysteme 16 bis 18 im wesentlichen darin, den Verkehr der in die Mischereinheit 15 ein- und auslaufenden Daten durch einen bestimmten Takt zu steuern und die Befehlsbzw. Abfragetelegramme mit den entsprechenden Adressen zu versehen.

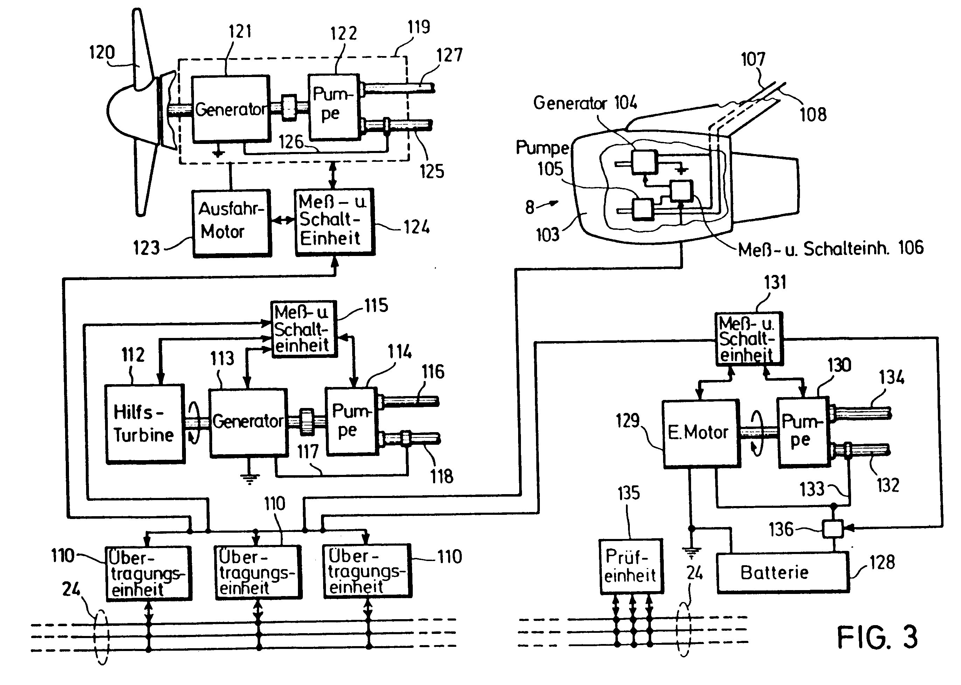

Fig. 3 zeigt eine Prinzipdarschaltung einer erfindungsgemäßen Energieversorgungseinrichtung. Damit kann die flugzeugseitige Anordnung zur Übertragung von Steuersignalen aus vier verschiedenen Energiequellen versorgt werden, nämlich entweder aus einem Flugzeugtriebwerk 8, aus einer Hilfsturbine 112, aus einer elektrischen Batterie 128 oder aus einer Fahrtwindturbine 120. Innerhalb einer Triebwerksgondel 103 sind ein elektrischer Generator 104 und eine hydraulische Pumpe 105 mit der Welle des Triebwerks gekoppelt. Die hydraulische Versorgung der Servo-Einheiten 14.09 und 14.10 erfolgt über eine Druckleitung 107 und eine Rücklaufleitung 108. Der elektrische Ausgang des Generators 104 ist derart mit der Druckleitung 107 verbunden, daß das Metallrohr dieser Leitung gleichzeitig als elektrische Energieleitung dient. Der elektrische Gegenpol des Generatorausgangs ist mit Masse verbunden. Eine Meß-und Schalteinheit 106 steht einerseits mit dem Generator 104 sowie der Pumpe 105 und andererseits über drei parallel geschaltete Übertragungseinheiten 110 mit dem Netzwerk 24 in Verbindung. Eine Hilfsturbine 112 ist mit einem weiteren elektrischen Generator 113 und mit einer weiteren hydraulischen Pumpe 114 gekoppelt. Der Ausgang des Generators 113 ist über die Leitung 117 mit der Druckleitung 118 verbunden, so daß auch hier die Druckleitung 118 gleichzeitig als elektrische Energieleitung dient. Der Rücklauf erfolgt hier über die Leitung 116. Der elektrische Rückfluß erfolgt über Masse. Eine Meß- und Schalteinheit 115 steht einerseits mit der Hilfsturbine 112, dem Generator 113 sowie der Pumpe 114 und andererseits über die Übertragungseinheiten 110 mit dem Netzwerk 24 in Verbindung.

Als weitere Energiequelle steht die (Bord)-Batterie 128 zur Verfügung. Die Batterie 128 kann einen mit einer hydraulischen Pumpe 130 gekoppelten E-Motor 129 speisen. Eine Batterieleitung 133 ist auch hier derart mit einer Druckleitung 132 verbunden, daß diese gleichzeitig als elektrische Energieleitung dient. Der elektrische Rückfluß erfolgt über Masse. Als hydraulischer Rücklauf dient die Leitung 134. Eine Meß- und Schalteinheit 131 steht einerseits mit dem E-Motor 129, der Pumpe 130 sowie einem Schalter 136 und andererseits über die Übertragungseinheiten 110 mit dem Netzwerk 24 in Verbindung.

Als weitere Energiequelle ist eine Fahrtwindturbine 120 vorgesehen, die mittels eines Ausfahrmotors 123 zusammen mit einem Aggregat 119 in den Fahrtwind ausfahrbar ist. Das Aggregat 119 besteht im wesentlichen aus einem elektrischen Generator 121 und einer hydraulischen Pumpe 122. Eine Ausgangsleitung 126 des Generators ist so mit einer Druckleitung 125 verbunden, daß diese gleichzeitig als elektrische Energieleitung dient. Der hydraulische Rücklauf erfolgt über eine Leitung 127. Der elektrische Rückfluß erfolgt über Masse.

Eine an beliebiger Stelle angeordnete Prüfeinheit 135 steht mit dem faseroptischen Netzwerk 24 in Verbindung, so daß diese mit den vorgenannten Meß- und Schalteinheiten digital korrespondieren kann. Bei normalem störungsfreien Betrieb werden die elektrische und die hydraulische Energie durch den innerhalb der Triebwerksgondel 103 angeordneten Generator 104 und durch die Pumpe 105 geliefert. Dabei werden durch die Prüfeinheit 135 laufend typische Betriebsdaten des Generators und der Pumpe, wie Spannung, Temperatur, Druck usw. mittels an die Meß- und Schalteinheit adressierter digitaler Telegramme abgefragt und mit innerhalb der Prüfeinheit 135 abgespeicherten Vorgabewerten verglichen. Bei Ausfall des Triebwerkes wird dieses von der Prüfeinheit 135 sofort erkannt und die nach reiner abgespeicherten Prioritätsliste nächstfolgende Energiequelle, z.B. die Hilfsturbine 112, eingeschaltet. Das entsprechende, an die Meß- und Schalteinheit 115 adressierte digitale Lichtsignal gelangt über das Netzwerk 24 zu der Übertragungseinheit 110, wird in ein elektrisches Signal umgewandelt, identifiziert und infolge der richtige Adresse an die Meß- und Schalteinheit 115 weitergeleitet. Diese schaltet aufgrund des erhaltenen Telegramms die Hilfsturbine ein und liefert auf Abfrage die entsprechenden Betriebsdaten zurück an die Prüfeinheit 135. Bei Ausfall der Hilfsturbine wird dies von der Prüfeinheit 135 sofort erkannt und die Fahrtwindturbine 120 als nächstfolgende Energiequelle eingeschaltet. Die entsprechenden von der Prüfeinheit 135 ausgehenden Signale gelangen über das Netzwerk 24 und die Übertragungseinheit 110 zur Meß- und Schalteinheit 124, die daraufhin die entsprechenden Schaltvorgänge auslöst. Nach Versagen der Fahrtwindturbine 120 wird auf analoge Weise die Batterie 128 als Energiequelle herangezogen. In Anbetracht des relativ hohen Leistungsbedarfes, z.B. der Steuereinrichtungen, kann die Versorgung der lebenswichtigen Systeme des Flugzeuges nur für kurze Zeit durch die Batterie sichergestellt werden. Es ist jedoch zu beachten, daß die so gewonnenen Minuten entscheidend sein können. Bei einer derartigen Einrichtung wäre naturgemäß die Batteriespannung von 28 V auf die üblichen 115 V/400 Hz des Bordnetzes mittels eines hier nicht dargestellten Wandlers umzusetzen. Bei mehrmotorigen Flugzeugen sind alle Triebwerke mit elektrischen Generatoren und Pumpen ausgestattet. Hier würde bei Ausfall von Triebwerk 8 zunächst das weitere Triebwerk 8′ zur Versorgung des Steuereinrichtung herangezogen, bevor die Hilfsturbine 112 eingeschaltet wird.

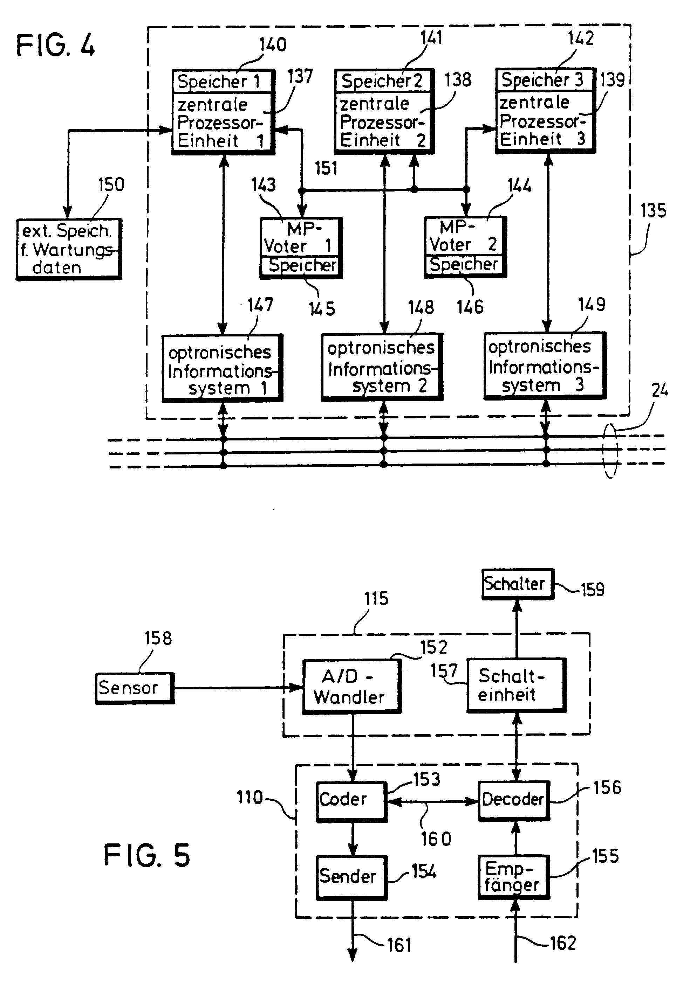

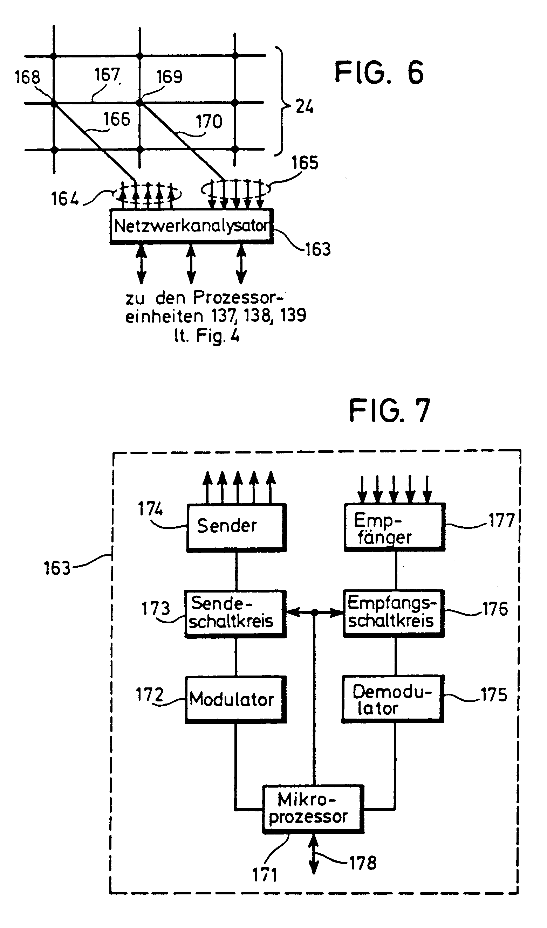

Fig. 4 zeigt eine interne Prinzipschaltung der Prüfeinheit 135 aus Fig. 3. Diese besteht im wesentlichen aus drei zentralen Prozessoreinheiten 137,138 und 139 mit jeweils angeschlossenen Speichern 140,141 und 142. Jede zentrale Prozessoreinheit 137, 138 und 139 ist über ein optronisches Informationssystem 147,148 und 149 mit dem Netzwerk 24 verbunden. Zwei MP-Voter (Mikroprozessor-Voter) 145 und 146 stehen über eine gemeinsame Datenleitung 151 mit den Prozessoreinheiten 137,138 und 139 in Verbindung. Ein externe Speicher 150 für Wartungsdaten kann z.B. an die Prozessoreinheit 137 angeschlossen werden. Da die optronischen Informationssysteme 147, 148 und 149 mit dem Netzwerk 24 in Verbindung stehen, kann die Prüfeinheit 135 praktisch mit allen Funktions-Einheiten des Gesamtsystems, die an das Netzwerk 24 angeschlossen sind, in Datenaustausch trete.

Die Prüfeinheit 135 arbeitet wie folgt: Die drei Prozessoreinheiten 137,138 und 139 werden durch die beiden MP-Voter 143 und 144 überwacht, wobei der MP-Voter 143 normalerweise mit der Prozessoreinheit 137 als Abfragetakt-bestimmende Schaltung arbeitet. Erhält der MP-Voter 143 von allen Prozessoreinheiten 137,138 und 139 zeitgleiche Abfragetakte, so ist die Prüfeinheit in Ordnung. Fällt der Abfragetakt einer Prozessoreinheit nicht mit dem der beiden anderen Prozessoreinheiten zusammen, so wird die betreffende Prozessoreinheit über die beiden MP-Voter 143 und 144 abgeschaltet. Die MP-Voter 143 und 144 prüfen sich hierbei gegenseitig auf gleichen Informationsstand. Tritt hierbei eine Unstimmigkeit auf, so wird die Prüfung der MP-Voter der Reihe nach von einer der Prozessoreinheiten übernommen, bis erkannt ist, welcher der beiden MP-Voter als defekt abzuschalten ist. Hierdurch ist sichergestellt, daß die interne Zuverlässigkeit der Prüfeinheit 135 höher ist als die Einzelzuverlässigkeit der jeweils zu überprüfenden Einzelkomponenten. Die Prüfeinheit 135 fragt nun jede einzelne Funktionseinheit der Energieversorgungseinrichtung mit einer dieser Einheit zugeordneten Schlüsseladresse ab. Daraufhin sendet die angesprochene Einheit ein an die Prüfeinheit 135 adressiertes Datentelegramm aus, das die festgestellten Betriebsdaten in verschlüsselter Form sowie die Adresse der Einheit enthält. Innerhalb der Prüfeinheit werden die festgestellten Daten mittels eines Analysenprogramms mit in den Speichern 140,141,142 enthaltenen Vorgabewerten verglichen. Hierdurch wird festgestellt, ob die betreffende Einheit in Ordnung oder defekt ist. Ist die Einheit defekt, so wird diese durch die Prüfeinheit 135 abgeschaltet und die laut Liste nachfolgende betriebsbereite Einheit zur Übernahme der Funktion eingeschaltet. Die entsprechenden Schaltbefehle gelangen dabei in Form adressierter digitaler optischer Telegramme zu den betreffenden Einheiten. Dabei wird der Verkehr der in die Prüfeinheit 135 ein- und auslaufenden Daten durch die optronischen Informationssysteme 147,148 und 149 in einem bestimmten Takt gesteuert. Die Befehls bzw. Abfragetelegramme werden dabei durch die vorgenannten Systeme mit den entsprechenden Adressen versehen.

Fig. 5 zeigt eine interne Prinzipschaltung z.B. der Meß- und Schalteinheit 115 nach Fig. 3. Diese Einheit besteht im wesentlichen aus einem A/D-Wandler (Analog/Digital-Wandler) 152 und einer Schalteinheit 157. Zweckmäßigerweise ist hier auch die Übertragungseinheit 110 mit ihrer internen Schaltung dargestellt. Diese Einheit besteht im wesentlichen aus einem Coder 153, einem Sender 154, einem Empfänger 155 und einem Decoder 156, die wie in der Schaltung angegeben, miteinander verbunden sind. Die Wirkungsweise der Meß- und Schalteinheit 115 wird nun am Beispiel der Hilfsturbine 112 erläutert. Wenn die Hilfsturbine 112 in Betrieb ist, wird mittels eines Sensors 158 z.B. die Ausgangsspannung des Generators 113 gemessen und in Form eines entsprechenden analogen Signals in den A/D-Wandler 152 eingegeben. Dieser erstellt ein entsprechendes digitales Signal, das er an den Coder 153 weiterleitet. Der Coder 153 versieht dieses Signal mit der Adresse der Prüfeinheit 135 und leitet das nunmehr inhaltlich vollständige Telegramm an den Sender 154 weiter. Durch die Querverbindung 160 ist sichergestellt, daß das Telegramm nur auf den Sender 154 weitergeleitet wird, wenn ein entsprechend adressiertes Abfragetelegramm der Prüfeinheit 135 über den Empfänger 155 und den Decoder 156 eingegangen ist. Der Sender 154 und der Empfänger 155 sind über die Lichtleiter 161 und 162 an das Netzwerk 24 angeschlossen und die entsprechenden Telegramme werden in Form digitaler Lichtsignale ausgetauscht. Mit Hilfe weiterer Sensoren können auch andere Größen gemessen und an die Prüfeinheit 135 weitergeleitet werden, wie z.B. die Turbinendrehzahl, der Generatorstrom, der Hydraulikdruck usw. Wird von der Prüfeinheit ein Defekt an der Hilfsturbine festgestellt, so trifft über das Netzwerk 24 ein an die Schalteinheit 157 adressiertes Telegramm mit dem Abschaltbefehl über den Empfänger 155 ein, das vom Decoder 156 erkannt und gelesen wird, der daraufhin ein entsprechendes Signal an die Schalteinheit 157 weiterleitet. Entsprechend dem Inhalt des Telegramms veranlaßt die Schalteinheit 157 die Trennung aller aus Sicherheitsgründen zu lösenden Wirkverbindungen des Flugzeuges mit der Hilfsturbine 112, dem Generator 113 und der Pumpe 114. Dabei kann z.B. ein Schalter 159 zum Abschalten des Generators 113 vorgesehen sein.

Fig. 6 zeigt einen an einen Teil des faseroptischen Netzwerkes 24 angeschlossenen Netzwerkanalysator 163. Dieser weist je eine große Zahl faseroptischer Ausgänge 164 und Eingänge 165 auf. Zur Prüfung eines Lichtleiters 167 ist ein Knoten 168 über einen Prüfleiter 166 mit einem der faseroptischen Ausgänge 164 verbunden. Außerdem ist ein Knoten 169 über einen weiteren Prüfleiter 170 mit einem der faseroptischen Eingänge 165 verbunden. Mittels eines in den Knoten eingeleiteten vom Netzwerkanalysator 163 ausgehenden Lichtsignals wird nun festgestellt, ob das im Knoten 169 eingefangene und über den Prüfleiter 170 an den Netzwerkanalysator weitergeleitete Lichtsignal einem intakten oder defekten Lichtleiter 167 entspricht. Hierzu ist es erforderlich, daß das Netzwerk 24 in bezug auf die Betriebssignale eine sehr niedrige, aber in bezug auf die Prüfsignale eine derart hohe Dämpfung aufweist, daß sich eine deutlich meßbare Lichtleiter ergibt. Dadurch kann der störende Einfluß der über andere Knoten führenden Nebenwege vernachlässigt werden. Die für Betriebs- bzw. Prüfsignale unterschiedliche Dämpfung des Netzwerkes 24 kann z.B. dadurch erreicht werden, daß für beide Signalarten unterschiedliche Farben verwendet werden, etwa rot für die Betriebssignale und grün für die Prüfsignale. Falls erforderlich, kann die Farbabhängigkeit der Netzwerksdämpfung durch eine entsprechende Einfärbung des Lichtleitermaterials gesteigert werden.

Fig. 7 zeigt eine interne Prinzipschaltung des Netzanalysators 163 nach Fig. 6. Der Netzwerkanalysator 163 besteht im wesentlichen aus einem Mikroprozessor 171, der einerseits über einen Modulator 172, einem Sendeschaltkreis 173 und einen Sender 174 und andererseits über einen Demodulator 175, einen Empfangsschaltkreis 176 und einen Empfänger 177 mit dem faseroptischen Netzwerk 24 in Verbindung steht. Zwischen dem Sendeschaltkreis 173 und dem Empfangsschaltkreis 176 besteht eine Querleitung, die ihrerseits mit dem Mikroprozessor 171 verbunden ist. Der Sender 174 weist so viele faseroptische Ausgänge auf, wie Knoten mit dem Sender 174 zu verbinden sind. Jeder Ausgang ist mit einer grünes Licht aussendenden Laserdiode bestückt. Entsprechend weist der Empfänger 177 so viele faseroptische Eingänge auf, wie Knoten mit diesem zu verbinden sind. Als eigentliche Empfangselemente sind hier Foto-Dioden oder Foto-Transistoren vorgesehen, die nur im Farbbereich des Prüfsignals arbeiten. Zur Prüfung des Netzwerkes 24 wird, gesteuert vom Mikroprozessor 171, durch den Sendeschaltkreis 173 eine bestimmte Laserdiode eingeschaltet und deren Licht eine Amplitudenmodulation von konstanter Frequenz und Amplitude aufgeprägt. Dabei wird der entsprechend modulierte Diodenstrom durch den Modulator 172 geliefert. Dieses Lichtsignal gelangt nun in den Knoten 168 des Netzwerkes 24, der mit dieser Laserdiode in Verbindung steht (s. Fig.6). Gleichzeitig wird durch den Empfangsschaltkreis 176 dasjenige Empfangselement mit dem Demodulator 175 verbunden, das zu dem gerade zu prüfenden Lichtleiter 167 des Netzwerkes 24 gehört. Dabei wandelt das Empfangselement das Lichtsignal in einen entsprechenden elektrischen Strom u. Innerhalb des Demodulators 175 wird das Modulationssignal aus dem elektrischen Strom zurückgewonnen und einem nicht dargestellten A/D-Wandler zugeführt. Dieser liefert ein der Spannung des Signals entsprechendes digitales Signal an den Mikroprozessor 171. Dieser speichert den für den betreffenden Zwei (Lichtleiter 167) des Netzwerkes 24 gemessenen Spannungswert ab und vergleicht ihn mit dem für diesen Zweig hier ebenfalls abgespeicherten Sollwert. Da das Prüf-Lichtsignal und die Modulation in ihrer Amplitude konstant gehalten werden, können Differenzen zwischen Soll- und Istwerten nur auftreten, wenn die geprüften Zweige des Netzwerkes 24 defekt sind. Der Mikroprozessor 171 steuert alle durch den Sendeschaltkreis 173 und den Empfangsschaltkreis 176 auszuführenden Schaltvorgänge. Er legt dabei gemäß einem internen Programm die einzelnen Prüfschaltungen auf alle Zweige des Netzwerkes 24 fest und leitet die dem jeweiligen Zustand des Netzwerkes 24 entsprechenden Daten an eine der Prozessoreinheiten der Prüfeinheit 135 weiter. Zur Steigerung der Zuverlässigkeit können drei der vorbeschriebenen Netzwerkanalysatoren 163 in Parallelschaltung betrieben werden. Hierzu ist der jeweilige der Pos. 178 entsprechende Anschluß mit je einer Prozessoreinheit 137,138 und 139 der Prüfeinheit 135 zu verbinden. Der Netzwerkanalysator ist zweckmäßigerweise als interner Bestandteil der Prüfeinheit 135 ausgeführt.

Die erfindungsgemäße Überwachung und Steuerung durch eine mit Maß- und Schalteinheiten 115,131,124 digital korrespondierende Prüfeinheit 135 ist nicht auf die beispielhaft dargestellte Energieversorgungseinrichtung beschränkt, sondern sie kann z.B. im Falle eines Flugzeuges mit einer Anordnung zur Übertragung von Steuersignalen auf alle peripheren Einheiten dieser Anordnung ausgedehnt werden. Insbesondere besteht die Möglichkeit, z.B. bei Ausfall eines Ruders speziell auf den jeweiligen Notfall bezogene und in den Speichern der Prüfeinheit 135 vorhandene Notprogramme zu fahren.

Eine übergeordnete Bedeutung der Erfindung ergibt sich daraus, daß sie auf alle Anlagen und Systeme, von denen eine extrem hohe Zuverlässigkeit verlangt wird, angewendet werden kann. Hierzu gehören z.B. Steuerungen von Raumfahrzeugen, Prozeßsteuerungen von Kernkraftwerken, Stromversorgungsanlagen für Krankenhäuser, insbesondere für Operationsräume und Intensivstationen usw.

## Patentansprüche

1. Anordnung, insbesondere für Luftfahrzeuge, zur Übertragung von Steuersignalen auf Steuerflächen mit einem passiven Leitungssystem, wobei das Leitungssystem durch ein Netzwerk (24), bestehend aus mehrfach vermaschten Lichtleitern (11,12), gebildet ist, dadurch gekennzeichnet, daß die Energieversorgung der Anordnung mit einer gesonderten Energiequelle (8,112,120,128) erfolgt, die mit einer Meß- und Schalteinheit (106,115,124,131) versehen ist, die über drei parallel geschaltete Übertragungseinheiten (110) und dem Netzwerk (24) und über dieses mit einer Prüfeinheit (135) verbunden ist.

2. Anordnung nach Anspruch 1, dadurch gekennzeichnet, daß die Energiequelle ein Flugzeugtriebwerk (8), eine Hilfsturbine (112), eine Fahrtwindturbine (12) oder eine elektrische Batterie (128) ist.

3. Anordnung nach Anspruch 1 oder 2, dadurch gekennzeichnet, daß jede Übertragungseinheit (110) aus einem Coder (153), Decoder (156), Sender (154) und Empfänger (155) besteht, wobei der Coder und Decoder zusammengeschaltet, der Coder mit dem Sender und der Decoder mit dem Empfänger verbunden sind.

4. Anordnung nach einem der Ansprüche 1 bis 3, dadurch gekennzeichnet, daß die Meß- und Schalteinheiten (106,115,124,131) aus einem mit einem Sensor (158) verbundenen Analog-Digital-Wandler (152) und einer Schalteinheit (157) besteht und die Meß- und Schalteinheit mit den Übertragungseinheiten (110) zusammenarbeiten.

5. Anordnung nach einem der Ansprüche 1 bis 4, dadurch gekennzeichnet, daß die Prüfeinheit (135) aus drei Prozessoreinheiten (137,138,139) mit jeweils angeschlossenen Speichern (140,141,142), drei optronischen Informationssystemen (147,148,149) und zwei Mikroprozessor-Votern (145,146) besteht.

6. Anordnung nach einem der Ansprüche 1 bis 5, dadurch gekennzeichnet, daß an die Prüfeinheit (135) ein externer Speicher (150) für Wartungsdaten anschließbar ist.

7. Anordnung nach einem der Ansprüche 1 bis 6, dadurch gekennzeichnet, daß für die Prüfeinheit (135) mindestens ein Netzwerkanalysator (163) zur Überwachung des Netzwerkes (24) vorgesehen ist.

8. Anordnung nach den Ansprüchen 5 und 7, dadurch gekennzeichnet, daß je ein Netzwerkanalysator (163) mit einer Prozessoreinheit (137,138,139) der Prüfeinheit verbunden ist.

9. Anordnung nach Anspruch 7 oder 8, dadurch gekennzeichnet, daß die Netzwerkanalysatoren (163) mit Lichtsignalen arbeiten, die sich durch ihre Farbe, z.B. grün, gegenüber den Betriebssignalen, z.B. rot, unterscheiden.

10. Anordnung nach einem der Ansprüche 5 bis 9, dadurch gekennzeichnet, daß die Prüfeinheit (135) selbst die Überwachung und Steuerung der angeschlossenen Einheiten vornimmt.

11. Anordnung nach einem der Ansprüche 1 bis 10, dadurch gekennzeichnet, daß die Lichtleiter des Netzwerkes (24) aus faseroptischen Leitern bestehen und eine Einfärbung aufweisen.

**Claims**

1. An arrangement, more particularly for aircraft, for transmitting control signals to control surfaces with a passive conduction system, in which the conduction system is formed by a network (24) comprising photoconductors (11, 12) which are intermeshed many times, characterised in that the energy supply of the arrangement takes place with a separate energy source (8,112,120,128) which is provided with a measuring and switching unit (106,115,124,131) which is connected via three parallel-connected transmission units (110) and to the network (24) and via said network to a test unit (135).

2. An arrangement according to claim 1, characterised in that the energy source is an aircraft engine (8), an auxiliary turbine (112), a air flow turbine (12) or an electrical battery (128).

3. An arrangement according to claim 1 or 2, characterised in that each transmission unit (110) consists of a coder (153), decoder (156), transmitter (154) and receiver (155), in which the coder and decoder are connected together, the coder is connected to the transmitter and the decoder is connected to the receiver.

4. An arrangement according to any one of claims 1 to 3, characterised in that the measuring and switching units (106,115,124,131) consists of an analogue/digital converter (152) connected to a sensor (158) and a switching unit (157), and the measuring and switching unit cooperate with the transmission units (110).

5. An arrangement according to any one of claims 1 to 4, characterised in that the test unit (135) consists of three processor units (137,138,139) each with attached memories (140,141,142), three optronic information systems (147,148,149) and two microprocessor voters (145,146).

6. An arrangement according to any one of claims 1 to 5, characterised in that an external memory (150) for maintenance data can be connected to the test unit (135).

7. An arrangement according to any one of claims 1 to 6, characterised in that at least one network analyser (163) for monitoring the network (24) is provided for the test unit (135).

8. An arrangement according to claims 5 and 7, characterised in that in each case a network analyser (163) is connected to a processor unit (37,138,139) of the test unit.

9. An arrangement according to claim 7 or 8, characterised in that the network analysers (163) operate with light signals which differ by their colour, e.g. green, from the operating signals, e.g. red.

10. An arrangement according to any one of claims 5 to 9, characterised in that the test unit (135) itself undertakes the monitoring and control of the connected units.

11. An arrangement according to any one of claims 1 to 10, characterised in that the photoconductors of the network (24) consist of fibre-optics conductors and are coloured.

**Revendications**

1. Dispositif notamment destiné à des avions pour transmettre des signaux de commande à des surfaces de commande par un système de lignes passives, le système de ligne étant formé par un réseau (24) comprenant des guides de lumière (11, 12) reliés de manière multiple, dispositif caractérisé en ce que son alimentation en énergie est assurée par une source d'énergie particulière (8, 112, 120, 128) munie d'une unité de mesure et de commutation (106, 115, 124, 131) reliée par trois unités de transmission (110) branchées en parallèle et par le réseau (24) lui-même relié à une unité de contrôle (135).

2. Dispositif selon la revendication 1, caractérisé en ce que la source d'énergie est un moteur (8) de l'avion, une turbine auxiliaire (112), une turbine se plaçant dans le courant d'air extérieur (12) ou une batterie électrique (128).

3. Dispositif selon la revendication 1 ou 2, caractérisé en ce que chaque unité de transmission (110) se compose d'un codeur (153), d'un décodeur (156), d'un émetteur (154) et d'un récepteur (155), le codeur et le décodeur étant regroupés, le codeur étant relié à l'émetteur et le décodeur au récepteur.

4. Dispositif selon l'une des revendications 1 à 3, caractérisé en ce que les unités de mesure et de commutation (106, 115, 124, 131) se composent d'un convertisseur analogique/numérique (152) relié au capteur (158) et chaque unité de mesure et de commutation coopère avec les unités de transmission (110).

5. Dispositif selon l'une des revendications 1 à 4, caractérisé en ce que l'unité de contrôle (135) se compose de trois unités à processeur (137, 138, 139) auxquelles sont chaque fois reliées les mémoires (140, 141, 142), trois systèmes d'information optroniques (147, 148, 149) et deux électeurs à microprocesseur (145, 146).

6. Dispositif selon l'une des revendications 1 à 5, caractérisé par une mémoire externe (150) qui peut être reliée à l'unité de contrôle (135) pour les données d'entretien.

7. Dispositif selon l'une des revendications 1 à 6, caractérisé en ce que pour l'unité de contrôle (135) on a prévu au moins un analyseur de réseau (163) pour surveiller le réseau (24).

8. Dispositif selon les revendication 5 et 7, caractérisé en ce que chaque fois un analyseur de réseau (163) est relié à une unité de processeur (137, 138, 139) de l'unité de contrôle.

9. Dispositif selon la revendication 7 ou 8, caractérisé en ce que les analyseurs de canal de réseau (163) utilisent des signaux optiques qui se distinguent par leur couleur (par exemple le vert) par rapport aux signaux de fonctionnement (par exemple rouge).

10. Dispositif selon l'une des revendications 5 à 9, caractérisé en ce que l'unité de contrôle (135) effectue elle-même la surveillance et la commande des unités raccordées.

11. Dispositif selon l'une des revendications 1 à 10, caractérisé en ce que les guides de lumière du réseau (24) sont des fibres optiques teintées.

FIG. 1

EP 0 267 398 B1

**FIG. 2**

20

19

Mischer

15

16 — Info.-system 1
17 — Info.-system 2
18 — Info.-system 3

16a
17a
18a

10

24

12

11

22 — Höhen-messer
23 — Navi-gation

14.01 — Höhen-ruder
14.02 — Seiten-ruder
14.03 — Quer-ruder 1
14.04 — Quer-ruder 2
14.05 — Trimm-flosse
14.06 — Lande-klap-pen
14.07 — Vor-flügel
14.08 — Bug-fahr-werk
14.09 — Trieb-werk 1
14.10 — Trieb-werk 2

FIG. 3

FIG. 4

FIG. 5

## FIG. 6

168  167  169

166  170

24

165

164

Netzwerkanalysator

163

zu den Prozessoreinheiten 137, 138, 139
lt. Fig. 4

## FIG. 7

174  Sender

Empfänger  177

163

173  Sendeschaltkreis

Empfangsschaltkreis  176

172  Modulator

Demodulator  175

Mikroprozessor

171  178